Europäisches Patentamt

European Patent Office

Office européen des brevets

(19)

(11) Publication number: **0 387 359**
**A1**

## (12) EUROPEAN PATENT APPLICATION
### published in accordance with Art. 158(3) EPC

(21) Application number: **89910198.4**

(22) Date of filing: **07.09.89**

(86) International application number:
**PCT/JP89/00922**

(87) International publication number:
**WO 90/02982 (22.03.90 90/07)**

(51) Int. Cl.⁵: **G05B 19/405, G05B 19/18,**
**H04Q 9/00**

(30) Priority: **14.09.88 JP 230935/88**

(43) Date of publication of application:
**19.09.90 Bulletin 90/38**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **KAWAMURA, Hideaki**
**1375-5, Narahara-cho**
**Hachioji-shi Tokyo 193(JP)**
Inventor: **NAGAOKA, Yukihito**
**Gurinhiru-Terada 219-4 432, Terada-cho**
**Hachioji-shi Tokyo 193(JP)**

(74) Representative: **Billington, Lawrence Emlyn et al**
**HASELTINE LAKE & CO Hazlitt House 28**
**Southampton Buildings Chancery Lane**
**London WC2A 1AT(GB)**

(54) **METHOD AND APPARATUS FOR REMOTELY OPERATING MDI.**

(57) A method and an apparatus for remotely operating MDI in the numerical control. An NC apparatus (11) provided with the MDI unit and a display unit (11d) is connected to a host apparatus (12) through a telephone line (13), an operation command equivalent to the MDI key is transmitted from the host apparatus to the NC apparatus, the command is decoded and executed by the NC apparatus to display predetermined information on a display unit (11d-2), the information is transferred to the host apparatus over the telephone line, and a computer (12a) in the host apparatus receives the information and displays it on the display unit (12c) on the host side.

# EP 0 387 359 A1

## FIG. 1

DESCRIPTION

MDI REMOTE OPERATING METHOD AND APPARATUS

Technical Field

This invention relates to an MDI remote operating method and apparatus and, more particularly, to an MDI remote operating method and apparatus suited for use in remote diagnosis and remote monitoring of an NC apparatus.

Background Art

When an NC apparatus develops a problem which cannot be solved by the user, the user requests, by telephone or the like, that the maker of the NC apparatus make repairs. The maker of the NC apparatus has the user report the condition of the NC apparatus and then informs the user of what measures to take if the cause of the problem is ascertained from the reported condition. If the NC apparatus operates normally because of the measures taken, the maker of the apparatus need not dispatch a serviceman to the location of the apparatus.

However, if the NC apparatus does not operate normally after the measures that have been instructed are taken, or if the cause of the problem cannot be identified from the reported facts, a serviceman is dispatched to the location of the apparatus to clarify the cause of the problem, and measures for dealing with the cause are taken.

It is arranged so that an NC machining program, as well as various conditions of the NC apparatus and various set data, can be displayed on a display unit CRT by manipulating MDI keys on a CRT/MDI unit (a display and manual data input unit). The data displayed on the display unit CRT are very effective means for investigating the cause of a problem, and a serviceman from the maker of the NC apparatus is capable of ascertaining the cause of a problem to some extent from the various types of displayed data.

In the prior art, however, the data on the CRT display cannot be accurately acquired by telephone from a user at a remote location, and therefore the cause of the problem cannot be investigated. Consequently, a serviceman must be sent to the site. Even if the cause of the problem can be investigated, considerable time is required.

Accordingly, an object of the present invention is to provide an MDI remote operating method and apparatus in which any desired data can be accurately ascertained by remote operation from data displayed on the display unit of a CRT/MDI unit, without dispatching a serviceman to the site of the problem.

Disclosure of the Invention

The foregoing object is attained by connecting an NC apparatus provided with an MDI unit and a display unit to a host apparatus through a telephone line, transmitting an operation command equivalent to an MDI key from the host apparatus to the NC apparatus, decoding and executing the command in the NC apparatus and displaying prescribed information on the display unit, transferring the information to the host apparatus through the telephone line, and having a computer of the host apparatus receive the information and display it on a display unit on the host side.

Brief Description of the Drawings

Fig. 1 is a block diagram of an MDI remote operating system according to the present invention; and

Fig. 2 is a a diagram for describing remote operation and display control according to the present invention.

Best Mode for Carrying Out the Invention

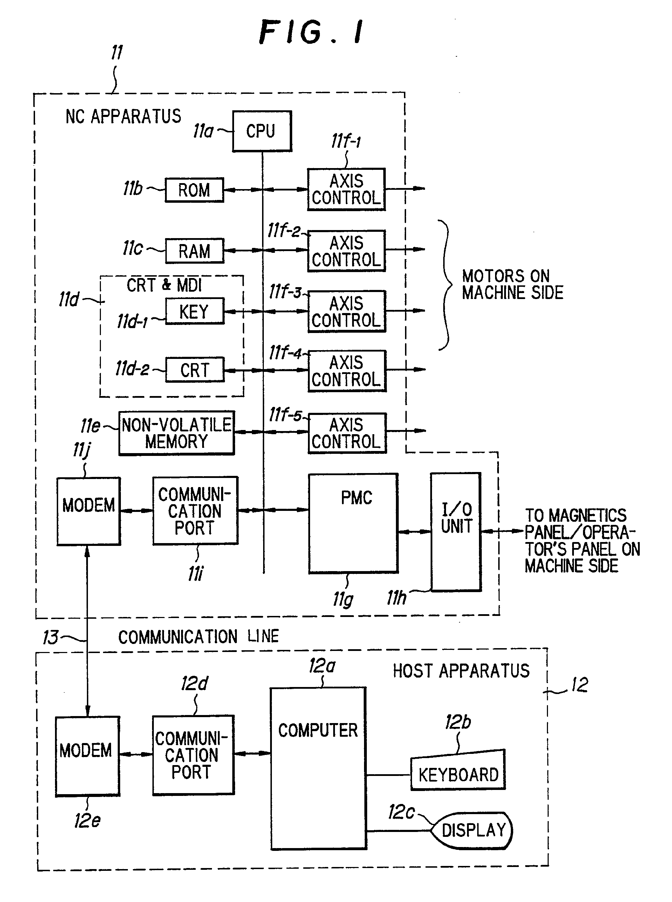

Fig. 1 is a block diagram of an MDI remote operating system according to the present invention, in which numeral 11 denotes an NC apparatus, 12 a host apparatus, and 13 a telephone line (which can be a local area network LAN).

The NC apparatus 11 has a processor (CPU) 11a, a ROM 11b for storing a control program, a RAM 11c, a CRT/MDI unit 11d equipped with a keyboard (KEY) 11d-1 and a display unit (CRT) 11d-2, a non-volatile memory (a RAM for battery back-up) 11e for storing various parameters and offset data, axis controllers 11f-1 through 11f-5 for respective axes, a PMC unit 11g which executes predetermined sequence processing for performing an exchange of data with external equipment (a magnetics panel and operator's panel on the machine side), an I/O unit 11h, a port 11i for communication, and a modem 11j for a telephone line.

The host apparatus 12 has a computer 12a, a keyboard 12b, a display unit 12c, a communication port 12d, and a modem 12e for the telephone line.

The ROM 11b of the NC apparatus 11 stores (i) a control program for numerical control, (ii) communication software, (iii) software for interpreting and executing commands from the host, and (iv) software for editing a displayed image. The RAM 11c stores the results of processing, present position/remaining traveling distance along each axis, a part program (NC machining program) currently being run, and various input/output data (DI/DO data).

The keyboard KEY 11d-1 of the CRT/MDI unit 11d is provided with various function keys and alphanumeric keys. By operating prescribed function keys, the following can be displayed:

(1) a display screen of present position (machine coordinates and workpiece coordinates)/remaining traveling distance;

(2) an alarm display screen;

(3) a diagnostic screen displaying the states of input/output signals (DI/DO signals) to the NC apparatus;

(4) a display screen showing the state of a ladder controlling a sequence on the machine side;

(5) a screen displaying a part program;

(6)   a parameter display screen;

(7)   a screen displaying ROM/RAM data;

(8)   a screen displaying offset data; and

(9)   a screen displaying the type and edition number of the system configuration/software.

Further, it is so arranged that data input, the turning of pages of the display screen and the scrolling thereof can be carried out.

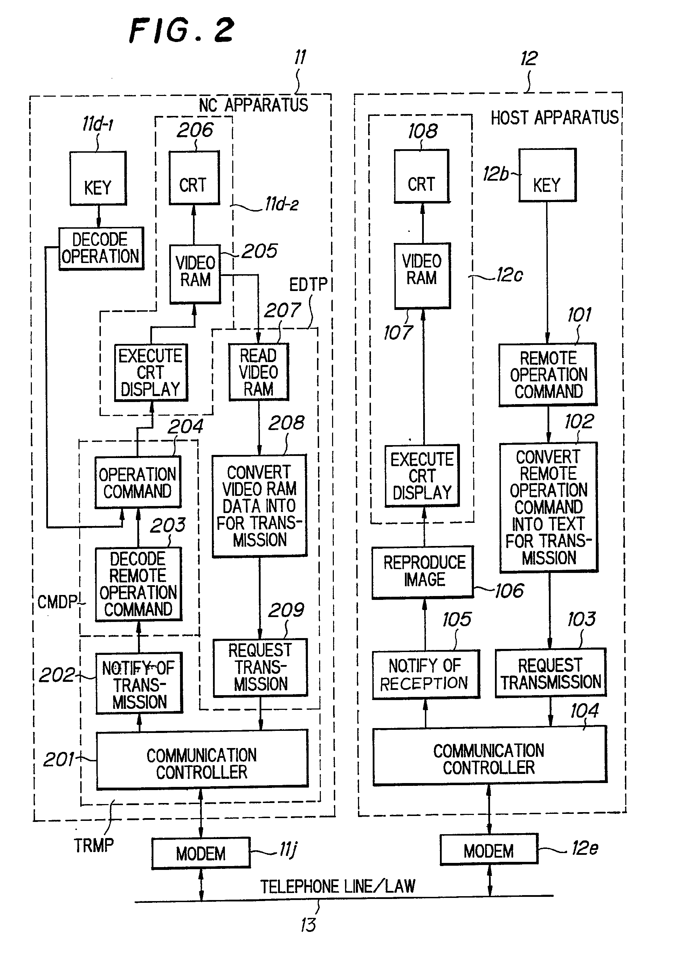

Fig. 2 is a diagram for describing MDI remote operation/display according to the present invention, in which portions identical with those shown in Fig. 1 are designated by like reference characters.  In the NC apparatus 11, TRMP represents a section for executing processing in accordance with communication software, CMDP a section for executing processing in accordance with command interpretation/execution software, and EDTP a section for executing processing in accordance with display image editing software.

MDI remote operation and display processing of the present invention will now be described in accordance with Fig. 2.

When a problem develops in the NC apparatus 11 and the user reports the need for repairs, a serviceman at the service center where the host apparatus 12 is installed dials the number of the telephone attached to the NC apparatus 11 so that the host apparatus and the NC apparatus are connected via the telephone line 13.

Thereafter, the serviceman operates the keyboard 12b in order to have the NC apparatus send the prescribed data, thereby generating a remote operation command 101 equivalent to an MDI key on the NC apparatus side.

When the computer 12a receives the remote operation command, it converts the command into a text for transmission (102) and generates a transmit request 103.

In response, a communication controller 104 of the computer transfers the text to the NC apparatus 11 via the modem 12e, telephone line 13 and modem 11j.

Upon receiving the text from the host 12, a communication controller 201 in the NC apparatus 11 generates a signal 202 giving notification of the fact and delivers the received text to the command interpretation/execution section CMDP.

A command interpreting unit 203 in the command interpretation/execution section CMDP decodes the received text (remote operation command), and a command executing unit 204 executes the remote operation command and provides the display unit 11d-2 with an output of data (display data) requested by the remote operation command.

The display unit 11d-2 converts the entered data into pixel data (an image), stores the data in a V-RAM 205, and subsequently reads the image out of the V-RAM and displays it on the CRT 206.

When the image has been stored in the V-RAM 205, the display image editing section EDTP read the image out of the V-RAM, converts the image into a text for transmission (207, 208) and sends a transmission request 209 to the communication controller 201.

In response, the communication controller 201 transfers the test to the host 12 via the modem 11j, telephone line 13 and modem 12e.

When the communication controller 104 of the computer receives the text from the NC apparatus 11, it sends a signal 105 informing of text reception to an image reproducing unit 106, which restores the text to pixel data (an image), stores the pixel data in a V-RAM 107 and displays it on a CRT 108.

As a result, the CRT/MDI unit 11d of the NC apparatus 11 can be remotely operated at the service center, and the data displayed on the CRT/MDI unit can be displayed on the display unit on the host side.

Thereafter, the CRT/MDI unit 11d of the NC apparatus 11 is remotely operated from the service center whenever necessary to display desired data and investigate the cause of a problem.

In the case described above, the pixel data (image) is converted into text and sent from the side of the NC apparatus to the host, and the image is reproduced from the received text on the side of the host. However, it is also possible to adopt an arrangement in which display data (codes) are sent from the side of the NC apparatus to the side of the host, and the image is generated and displayed based on the display data on the host side.

Further, though remote diagnosis of an NC apparatus is described above, the invention is applicable also to a case where a center in a factory having a number of NC machine tools is provided with a host apparatus, and each of the NC machine tools is remotely monitored in central fashion from the center.

In addition, though a display request is outputted from the host side in the case described above, this is not a limitation upon the invention, for the arrangement is such that a function equivalent to that of the CRT/MDI unit, such as a function for setting various kinds of data, can be implemented by remote operation.

Thus, in accordance with the present invention, it is arranged to transmit an operation command equivalent to an MDI key from a host apparatus to an NC apparatus, decode and execute the command in the NC apparatus and display prescribed information on a display unit, transfer the information to the host apparatus through communication means, and have a computer of the host apparatus display the information on a display unit. As a result, any desired data can be accurately ascertained by remote operation from data displayed on a CRT/MDI unit, without dispatching a serviceman to the site of the problem. The invention therefore is effective for use in investigating the cause of a problem in an NC apparatus and in remotely monitoring an NC apparatus.

CLAIMS:

1. A method of remotely operating an MDI, characterized by:

connecting an NC apparatus provided with an MDI unit and a display unit to a host apparatus through communication means;

transmitting an operation command equivalent to an MDI key from the host apparatus to the NC apparatus through the communication means;

decoding and executing said command in the NC apparatus and displaying prescribed information on the display unit, and transferring said information to the host apparatus through the communication means; and

having a computer of the host apparatus receive said information and display it on a display unit on the host side.

2. An apparatus for remotely operating an MDI, characterized by comprising:

communication means for performing an exchange of data between an NC apparatus, which is provided with an MDI unit and a display unit, and a host apparatus;

means for transmitting an operation command equivalent to an MDI key from the host apparatus to the NC apparatus through the communication means;

means in the NC apparatus for decoding and executing the operation command, which has been transmitted by the host apparatus, and displaying prescribed information on the display unit;

means for transferring the information displayed on said display unit to the host apparatus through the communication means; and

means in the host apparatus for receiving the information from the NC apparatus and displaying it on a display unit on the host side.

3.   An apparatus for remotely operating an MDI according to claim 2, characterized in that said communication means has a modem, for a telephone line, provided on the side of the NC apparatus, a modem, for a telephone line, provided on the side of the host apparatus, and a telephone interconnecting these two modems.

EP 0 387 359 A1

# FIG. 1

EP 0 387 359 A1

# FIG. 2

**NC APPARATUS** (11)

- **KEY** (11d-1)
- **CRT** (206)
- **DECODE OPERATION** (11d-2)
- **VIDEO RAM** (205)
- **EXECUTE CRT DISPLAY** (204)
- **READ VIDEO RAM** (207) — EDTP
- **OPERATION COMMAND**
- **CONVERT VIDEO RAM DATA INTO FOR TRANSMISSION** (208)
- **DECODE REMOTE OPERATION COMMAND** (203) — CMDP
- **NOTIFY OF TRANSMISSION** (202)
- **REQUEST TRANSMISSION** (209)
- **COMMUNICATION CONTROLLER** (201) — TRMP

**HOST APPARATUS** (12)

- **CRT** (108)
- **KEY** (12b)
- **VIDEO RAM** (107) — 12c
- **REMOTE OPERATION COMMAND** (101)
- **EXECUTE CRT DISPLAY**
- **CONVERT REMOTE OPERATION COMMAND INTO TEXT FOR TRANSMISSION** (102)
- **REPRODUCE IMAGE** (106)
- **NOTIFY OF RECEPTION** (105)
- **REQUEST TRANSMISSION** (103)
- **COMMUNICATION CONTROLLER** (104)

**MODEM** (11j)

**MODEM** (12e)

**TELEPHONE LINE/LAW** (13)

# INTERNATIONAL SEARCH REPORT

International Application No **PCT/JP89/00922**

## I. CLASSIFICATION OF SUBJECT MATTER (if several classification symbols apply, indicate all) 6

According to International Patent Classification (IPC) or to both National Classification and IPC

Int. Cl$^4$     G05B19/405, G05B19/18, H04Q9/00

## II. FIELDS SEARCHED

| Minimum Documentation Searched 7 | |
|---|---|
| Classification System | Classification Symbols |
| IPC | G05B19/405, G05B19/18 |

| Documentation Searched other than Minimum Documentation to the Extent that such Documents are Included in the Fields Searched 8 |
|---|
| Jitsuyo Shinan Koho       1932 – 1989 <br> Kokai Jitsuyo Shinan Koho     1971 – 1989 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 57-114906 (Quianee and Trekker Corp.) <br> 17 July 1982 (17. 07. 82) (Family: none) | 1 - 3 |
| Y | JP, A, 50-106085 (Quianee and Trekker Corp.) <br> 21 August 1975 (21. 08. 75) <br> & USP, A, 3,882,305 | 1 - 3 |
| Y | JP, A, 60-262209 (Mitsubishi Electric Corporation) <br> 25 December 1985 (25. 12. 85) <br> (Family: none) | 1 - 3 |
| Y | JP, A, 60-175104 (Mitsubishi Electric Corporation) <br> 9 September 1985 (09. 09. 85) <br> (Family: none) | 1 - 3 |

\* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| October 12, 1989 (12. 10. 89) | October 23, 1989 (23. 10. 89) |
| International Searching Authority | Signature of Authorized Officer |
| Japanese Patent Office | |

Form PCT/ISA/210 (second sheet) (January 1985)